# EUROPEAN PATENT APPLICATION

(11) **EP 4 528 615 A1**
(43) Date of publication of application: **26.03.2025**
(21) Application number: 23198967.4
(22) Date of filing: 22.09.2023
(51) Int. Cl.: G06Q 10/20, G06Q 10/0631, G05B 23/02, H04W 4/02, H04W 4/80

(54) **COMPUTER-IMPLEMENTED METHOD FOR DISTRIBUTING PORTIONS OF FAILURE INFORMATION DATA OF AN INDUSTRIAL PLANT TO PLANT PERSONNEL**

(71) Applicant: Siemens Aktiengesellschaft, 80333 München (DE)
(72) Inventor: Angerer, Lukas, 1210 Wien (AT); Nae, Vlad, 3002 Purkersdorf (AT); Zahorcak, Vladimir, 900 32 Borinka (SK)
(74) Representative: Siemens Patent Attorneys

(57) **Abstract**

Computer-implemented method for distributing portions (2) of failure information data (3) of an industrial plant (1) to plant personnel (15) according to their role, the plant comprising at least a first, preferable a plurality of workspaces (4), each comprising at least one proximity detector (5) and an indication unit (6), at least a first, preferably a plurality of mobile communication devices (7) which are designed to be carried by plant personnel (15), at least one role management unit (9), which is designed to have access to a database (12) in order to store data, the database (12) comprising a table of roles and a table of workspaces (4), comprising at least a first workspace position entry corresponding to the first workspace (4). The computer-implemented method (1) comprises the steps of receiving position data of the first mobile communication device (7) from the at least one proximity detector (5) of the first workspace (4), dividing the failure information data (3) into portions (2) related to roles, assigning the first mobile communication device (7) to a role, causing the indication unit (6) of the first workspace (4) to indicate the portion (2) of failure information data (3) related to the role of the first mobile communication device (7), if the distance data (10) assigned to the first mobile communication device (7) is below a prescribed maximum distance.

## Description

### FIELD OF THE INVENTION

The invention relates to a computer-implemented method for distributing portions of failure information data of an industrial plant to plant personnel according to their role.

The present invention further relates to a respective computer program product and a respective computer-implemented device.

### STATE OF THE ART

There are notification methods for industrial assets commercially available. Their concept is based on delivering notifications directly to the mobile devices and wearables of the personnel in order to cut down the reaction times. In contrast to this invention, commercially available methods have multiple constraining requirements, such as the need for the employer to provide mobile devices to the personnel, or that the notifications are properly channelled to the appropriately qualified persons, they have to be pushed to their mobile device and cannot be automatically filtered and displayed at production equipment itself. Additionally, such methods also require cloud or self-managed infrastructure and, most importantly, they distribute the notifications based on roles, but location unaware. If, as an alternative, the private mobile communication devices of the employees are involved in such a method, different problems in the field of data protection come up.

### SUMMARY OF THE INVENTION

One object of the present invention is to come over the known limitations of the state of the art and to provide a notification method for industrial assets that is unproblematic from data protection's point of view and that distributes the notifications based on roles as well as on the location of the mobile communication devices which receive those notifications.

This object is achieved by a computer-implemented method for distributing portions of failure information data of an industrial plant to plant personnel according to their role, the plant comprising at least a first, preferable a plurality of workspaces, each comprising at least one proximity detector and an indication unit, at least a first, preferably a plurality of mobile communication devices which are designed to be carried by plant personnel, at least one role management unit, which is designed to have access to a database in order to store data, the database comprising a table of roles and a table of workspaces, comprising at least a first workspace position entry corresponding to the first workspace, the computer-implemented method comprising the steps of receiving position data of the first mobile communication device from the at least one proximity detector of the first workspace, comparing this position data to the at least first workspace position entry in the table of workspaces in the database, calculating the distance from the first workspace to the first mobile communication device and assigning measured distance data to the first mobile communication device, receiving failure information data from the first workspace, dividing the failure information data into portions related to roles, assigning the first mobile communication device to a role, if the role is known, or requesting the role, if the role is unknown, which step is performed by the role management unit, adding these assignations to the table of roles, causing the indication unit of the first workspace to indicate the portion of failure information data related to the role of the first mobile communication device, if the distance data assigned to the first mobile communication device is below a prescribed maximum distance, which steps are repeated after a timespan.

The repetition timespan hereby is chosen dependent from operational parameters of the plant such as size of the plant - the bigger the plant is, the farer the single workspaces are away from each other - but are preferably in the one to two digit minute range, more preferably in the one to two digit second range.

The database is used as a central storage for all relevant data according to the method. Therefore, all relevant tables such as the table of roles and the table of workspaces are stored on that database. The table of roles is a list that assigns every mobile device to the role, the corresponding personnel who carries said mobile device, has. A role in this sense is the professionality of the corresponding person, like a quality engineer or maintenance personnel. The table of workspaces is nothing else than a list of all workspaces in the plant. The table comprises information such as dimensions and the position of the corresponding workspace as well as relevant data to assign a possible problem with the equipment of the workspace to a role that can treat said problem. Also history data comprising maintenance history of workspace equipment assigned to the roles, that did said maintenance work, and history data about positions of the mobile devices assigned to roles is stored on the database. The role position history data is used to calculate distances of workspaces to personnel assigned to roles via the mobile communication devices.

An industrial plant can be a production plant, but also any other industrial plant such as power plants, service facilities or logistics centers.

The proposed solution tackles one of the emerging problems posed by the increasingly connected and intelligent cyber-physical production systems (CPPSs), namely managing the high throughput of notifications and broadcasts of the (semi-)autonomous workspaces, called cyber-physical production units (CPPUs).

The method and the system according to the invention channels the non-critical notifications generated by the workspaces to the relevant shopfloor personnel, i.e. those who have the qualifications to address the problem or task specified in the notification, based on their physical presence in the immediate vicinity of the respective workspace. The role of plant personnel is defined by his or her qualifications to address the problem or task connected to the failure information data.

If the role of a passing-by employee is not recognized via his or her mobile communication device, the employee is asked to manually enter his or her role by using the role management unit, e.g. by using his or her mobile communication device, and in a next step gets the relevant portion of failure information data displayed on the indication unit of the corresponding workspace.

One advantage of the method related to the invention is, that it provides a possibility to install a notification system without any additional hardware, as soon as devices for determination of employee position are available. Since the method operates on a role base, it can involve the employees anonymously because it is independent of personal data of the employees. Because of that, their private mobile communication devices such as mobile phones can be involved in the system without generating problems in the field of data protection.

A further embodiment of the invention is characterized in that if the plant comprises more than one mobile communication device, the first mobile communication device mentioned in the claims is the mobile communication device to which the smallest distance data is assigned to.

This embodiment of the invention allows to apply the computer-implemented method to a plant comprising more than one personnel who has a respective role for the first workspace.

In a preferable embodiment of the invention, the method causes the indication unit of the first workspace to indicate an All-OK-Message, if empty failure information data is received.

So when no personnel is in the detection range (i.e. below a prescribed maximum distance) of the first workspace the indication unit will present a concise summary message visible from far away, e.g. "All OK". This avoids an unnecessary attraction of the employee's attention who is carrying the corresponding mobile communication device.

In a further embodiment, the method causes the indication unit of the first workspace to indicate an Assistance-needed-Message, if non-empty failure information data is received.

This embodiment relates to the situation when no employee, who is assigned to the role a specific portion of the failure information data is related to, is in the neighbourhood of the corresponding workspace. If an employee passes by, who is not assigned to the corresponding role, but is familiar with the corresponding workspace, this employee recognizes that there is assistance needed and can maybe set actions to resolve a specific problem.

In a special embodiment of the invention, parallel to the failure information data, status information data is received from the at least first workspace and is divided into portions of status information data assigned to roles, which portion of status information data of the first workspace related to the role the mobile communication device is assigned to, is indicated, especially additionally to the All-OK-Message, by the indication unit of the first workspace.

This realizes an opportunity for a crosscheck by any employee of the corresponding role who passes by. If that employee has the time to have a look on the corresponding indication unit of the first workspace, although there is currently no issue at that workspace, he or she can crosscheck relevant parameters.

In a preferable embodiment of the invention, a request to enter the role the mobile communication device with the smallest distance to the first workspace is assigned to, is indicated by the indication unit of the first workspace, if the portion of failure information data can not be related to the role to which the mobile communication device with the smallest distance to the first workspace is assigned.

If the role of a passing-by employee is not recognized via his or her mobile communication device, this embodiment allows to manually enter his or her role and to get, in a next step, the relevant portion of failure information data displayed on the indication unit of the corresponding workspace.

In a special embodiment of the invention, the mobile communication device and the proximity detector are Bluetooth-ready devices and can be coupled to each other.

Since Bluetooth is a well-established near field wireless communication standard, that is supported by many commercially available mobile devices such as mobile phones or smart phones, Bluetooth is especially applicable as a mobile communication standard to be employed in the frame of the invention.

In a preferable embodiment of the invention, the indication unit is an array of light emitting diodes or a screen, preferably a touchscreen.

While an array of light emitting diodes represents a very simple and cheap method of indication, a screen allows to indicate the portion of the failure information data on a very deep level of detail. A touchscreen additionally represents a simple way for the employee to enter data to the system, e.g. to enter the role.

Additionally comprised by the invention is a computer program product comprising instructions to cause a system comprising at least a first, preferable a plurality of workspaces, each comprising at least one proximity detector and an indication unit, at least a first, preferably a plurality of mobile communication devices, a database comprising a table of workspaces comprising a workspace position entry per workspace and a table of roles and the system further comprising at least one role management unit, to perform all the steps of the previously described computer-implemented method.

Further comprised by the invention is a computer-implemented device, comprising at least a first, preferable a plurality of workspaces, each comprising at least one proximity detector and an indication unit, the device further comprising at least a first, preferably a plurality of mobile communication devices, the device further comprising a database and at least one role management unit, which device is adapted to execute a computer-implemented method as previously described.

In contrast to state-of-the-art industrial notification solutions, this invention
- provides the means to deliver appropriately filtered notifications to the correspondingly qualified personnel currently in the proximity of the affected production equipment, i.e. workspaces;
- ensures the level of anonymity required by current data protection regulations as it is only aware of the staff roles and does not associate these to concrete identities;
- requires significantly less infrastructure (possibly none at all, if the production equipment, i.e. workspaces already have associated Bluetooth-capable edge devices or IPCs (industry PCs);
- enables the personnel to use any mobile device, including their personal ones, as no company software or data needs to be deployed on them;
- can be employed complementary to existing notification solutions which deliver notification in a personnel-centric fashion, thus also enabling proximity-based notification delivery potentially further decreasing the reaction time as the right person for the job is in the immediate vicinity of the workspace needing support.

A quantification of the concrete advantages in shopfloor efficiency and operating costs, employing this solution can facilitate:
- a reduction in the maintenance times: MTTR - mean time to repair, and MTTD - mean time to diagnose;
- a reduction in downtime of production lines;
- an increase in quality awareness for all personnel.

Further defining features of the present invention are:
- The on-boarding mechanism is using minimal information, only the device ID derived from e.g. a Bluetooth pairing and the role of the person being on-boarded (i.e. no name, no personnel identification number, no other information which can possibly be used to derive the identity of the person).
- The system uses preferably Bluetooth enabled devices' proximity to the production units, i.e. workspaces, for targeting the interaction with certain personnel on the basis of their role within the shopfloor.

### BRIEF DESCRIPTION OF FIGURES

The invention will be explained in closer detail by reference to a preferred embodiment, which is depicted schematically in the figures.
- Fig. 1: shows the principle of operation of the invention, by depiction of the signal flow between the components of the computer-implemented method.
- Fig. 2: shows the case of two workspaces, from which one shows an All-OK-Message and the other one shows an Assistance-needed-Message.
- Fig. 3: shows same case as Fig. 2, but with a person carrying a mobile communication device.
- Fig. 4: shows the case of Fig. 2 with two persons of different roles.
- Fig. 5: shows the case of Fig. 2 with a person of unknown role.
- Fig. 6: shows the principle of the software of the computer-implemented method.

### WAYS TO IMPLEMENT THE INVENTION

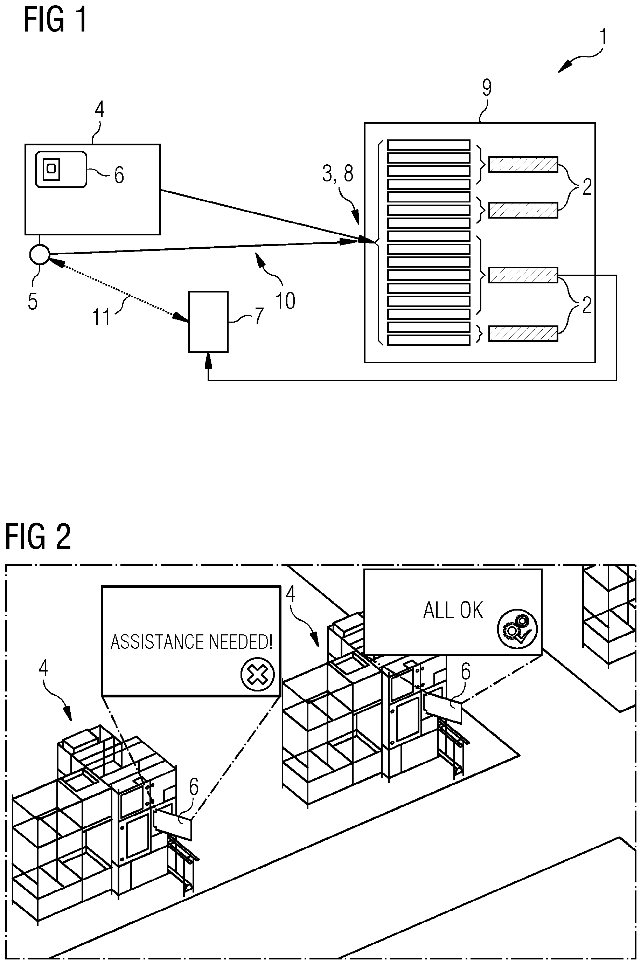

Fig. 1 shows the principal sketch of the computer system, realizing a method for distributing portions 2 of failure information data 3 of a plant 1.

In a first step, the position data of every mobile communication device 7 is received from the at least one proximity detector 5. This data is needed to calculate the distances 11 between the mobile communication devices 7 and the workspaces 4.

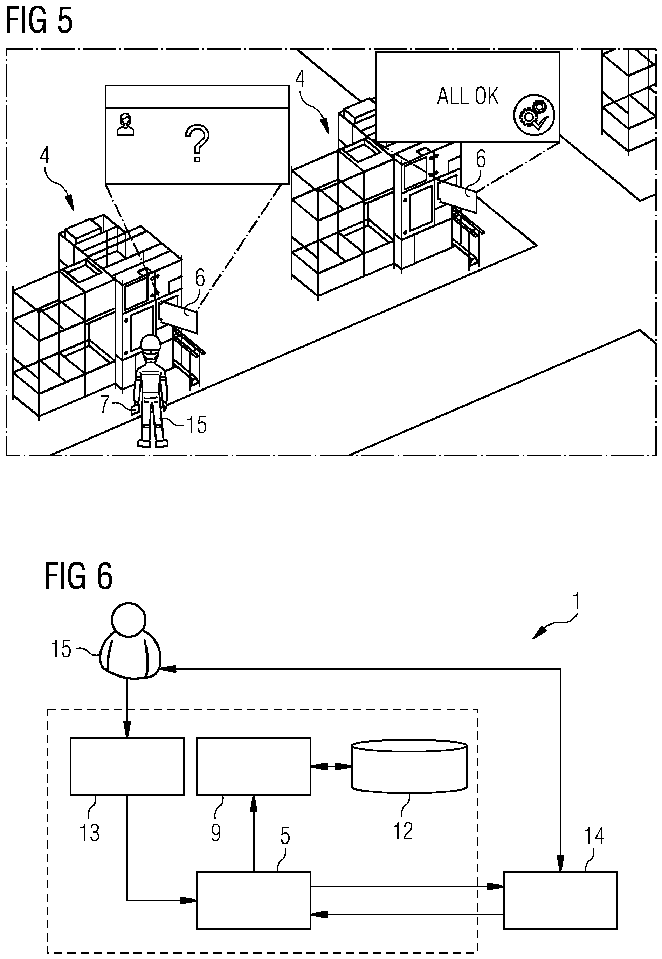

In a next step, this position data is compared to the workspace position entries in the table of workspaces in the database 12 (see Fig. 6). The workspaces 4 are in a fixed spatial position in the plant 1 and because of that, these positions are not needed to be updated every cycle of the described method.

After having available the position data of both the workspaces 4 and the mobile communication devices 7, the distances 11 from every workspace 4 to every mobile communication device 7 are calculated. This calculation can preferably be performed with respect to the pathways in the plant 1 - it might be the case, that there is no direct Euclidean connection between a workspace 4 and a mobile communication device 7, because another workspace 4 is in this way and the shortest available pathway leads around this workspace.

After having measured the distances 11 to every mobile communication device 7 they are stored as distance data 10 in the corresponding workspace position entry.

In a next step, failure information data 3 from every workspace 4 is received. This failure information data 3 as an example comprises error codes (whereas the status information data 8 comprises e.g. performance parameters of the corresponding workspace such as the current ware or product throughput).

This failure information data 3 is then divided into portions 2 of failure information data 3 related to roles. Roles are classes of employees of the plant that have any profession. Since not every portion 2 of the entire failure information data 3 of a workspace 4 is relevant for every role, the role management unit 9 performs a division into these roles. At this process of course, it may be the case that the failure information data 3 does not contain anything that relates to a specific role. In this case, the portion 2 assigned to this role is empty.

In the next step, every mobile communication device 7 is assigned to a role. These assignations are then added to the table of roles. The employee, who carries a specific mobile communication device 7, has any profession, so that his or her mobile communication device 7 can be assigned to a given role. In this way, anonymized notification becomes possible, since the whole method is role- and not employee-based. Further, it might be the case, that - due to a broad profession of the corresponding employee - a specific mobile communication device 7 is assigned to more than one role.

After these preparations the indication unit 6 of the first workspace 4 indicates the portion 2 of failure information data 3 related to the role of the first mobile communication device 7 if the distance data 10 assigned to the first mobile communication device 7 is below a prescribed maximum distance. The indication unit 6 displays the portion 2 of the failure information data 3 which is relevant to the role of the mobile communication device 7 which is closest to that workspace 4.

Finally, all of the preceding steps are repeated after a timespan. In this way, a constant update of the indication unit 6 is guaranteed.

Fig. 2 shows the case that at least two workspaces 4 are comprised by the plant 1. The display of the indication unit 6 of each workspace 4 is shown in an enlarged version above each workspace 4. The indication unit 6 of left workspace 4 shows an "Assistance Needed" message and the indication unit 6 of the right workspace 4 an "All OK" message. In the shown situation, currently no employee is present in the neighborhood of said two workspaces 4. Because of that, no additional information, i.e. no portion of status information data 8 under the "All OK" message and no portion 2 of failure information data 3 under the "Assistance Needed" message is shown.

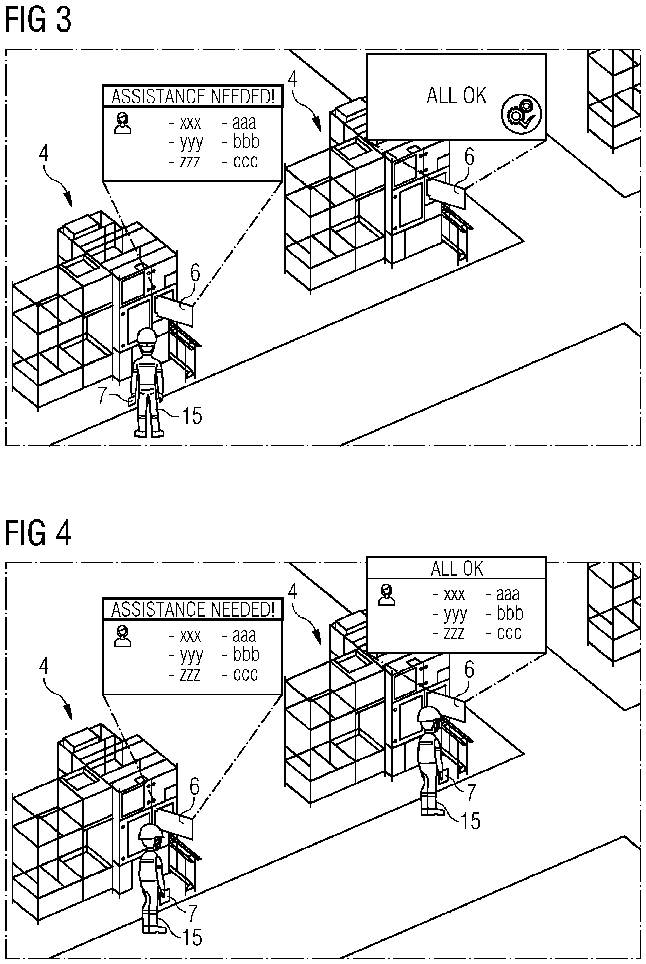

Fig. 3 shows, compared to Fig. 2, the case of an employee, a person of the plant personnel 15, being next to the left workspace 4, the employee carrying a mobile communication device 7 and having a role that fits to the portion 2 of failure information data 3 causing the "Assistance Needed" message shown by the indication unit 6 of left workspace 4. Under said "Assistance Needed" message, the specific problems to be treated by said employee, are listed, here depicted as "- xxx -aaa ... - ccc". The message could e.g. read: "Hi there, I see you are a Quality Engineer. Could you perform a visual inspection of this product which was flagged by the automatic inspection as possibly faulty?" If indication unit 6 is a touchscreen the person of the plant personnel 15 could either press the button "Inspected: OK" or "Inspected: Faulty".

Fig. 4 shows the case of two employees of different roles being present in the area of the two workspaces 4 shown in Fig. 2. While the situation at the left workspace 4 is basically the same as described in Fig. 3, the right workspace 4, showing an "All OK" message", lists the portion of status information data 8 being relevant for the role of the right employee, information here depicted as "- xxx -aaa ... - ccc", so that this employee, who has a role for this workspace 4, can crosscheck the portion of status information data 8. The status information data 8 could e.g. read: "Hi there, Quality Engineer! Everything is running within parameters" and display values of output and/or number of operations accomplished by this workspace 4.

At the left workspace 4 in Fig. 4 the person of the plant personnel 15 now has the role of maintenance personnel and receives, additional to "Assistance Needed", the notification, here again depicted as "- xxx ...", e.g. "Hi there! I see you can perform maintenance. Could you address these issues: ..." followed by a list of failure information data 3 like "Photosensor XY output failed plausibility check", Temperature sensor YZ disconnected". If indication unit 6 is a touchscreen the person of the plant personnel 15 could for each failure information data 3 have the possibilty to press the button "Resolved" after he or she has resolved the failure.

Fig. 5 shows the case, that compared to Fig. 3 the role of the employee is not recognized. In this case the left workspace 4 requests the role of said employee, see "?" on indication unit 6, and the employee is asked to enter his or her role. So the indication unit 6 e.g. could display "Please let me know what your role is?" and different roles like "Maintenance", "Quality Engineer", "Manager". The person of the plant personnel 15 could then enter this information by clicking the respective role displayed on the indication unit 6 if it is a touchscreen.

Fig. 6 shows a block diagram of the elements involved in the method, wherein the main elements of the method itself are shown inside the dashed line. The elements within the dashed line represent the architecture of so called microservices. The person on top of the block diagram in the left corner represents a person of the plant personnel 15. The person would carry a mobile communication device 7 (here not shown, see Fig. 3-5) which could be detected by a Bluetooth scanner 13 which itself is part of the proximity detector 5. The Bluetooth scanner 13 scans for known and unknown Bluetooth devices in the physical proximity of the workspaces 4 and delivers its data to the software system of the proximity detector 5 which identifies the plant personnel 15 in the physical proximity by the personnel's role. The proximity detector 5 sends so called presence events to a client 14 which is an external software system. The client 14 is responsible for sending respective notifications to the indication units 6 of the respective workspaces 4 in order to display the relevant portion 2 of failure information data 3 to the plant personnel 15. The client 14 also receives feedback from the plant personnel 15, like an indication of their role if it is not known by now, which feedback is sent to the proximity detector 5. The proximity detector 5 communicates with the role management unit 9 which is a software system and manages anonymized personnel data, i.e. it associates device IDs of the mobile communication devices 7 to personnel roles. The role management unit 9 stores its data in the database 12.

The software within the dashed lines acts as a presence event producer for other external software components, labelled as client 14 in Figure 6. The client 14 can subscribe to these events, and it will be notified when plant personnel 15 with particular roles on the factory floor enter the defined proximity areas around specific production equipment, i.e. around specific workspaces 4. Based on these events, the clients 14 can then directly interact with the plant personnel 15 knowing that the addressee is in the vicinity of the workspaces 4.

Internally, the software comprises three distinct components, implemented as microservices which collaborate to provide the described functionality, as follows:
The Bluetooth scanner 13 continuously scans for BT-enabled smart devices within its range. It recognizes and does not interact with its peers. It interacts with smart devices in a passive manner, by either automatically reconnecting to the already paired devices, or by offering to pair with currently unknown devices. The personnel initiate the pairing, and are thus given the choice to opt-in. When a previously unknown smart device, i.e. a mobile communication device 7, is paired with the Bluetooth scanner 13 or a known device enters the proximity range and automatically reconnects, the device ID is sent to the proximity detector 13 service. In case multiple smart devices are connected simultaneously, they are ordered by the rough estimate of their distance 11 to the workspace 4. This estimation is e.g. done by using the relative signal quality of the devices using one Bluetooth transceiver (lowest precision and no directionality) or by using two or three Bluetooth transceivers for increased precision and directionality.

The proximity detector 5 receives events from the Bluetooth scanner containing device IDs. It designates the first ID (i.e. the mobile communication device 7 assumed to be closest to the workshop 4 based on the proximity estimation) as the currently active device with which to interact. The role associated with this device is retrieved from the role management service of the role management unit 9 and an event containing the ID and the role is generated. The client 14 uses the event for its internal logic (e.g. if there are pending actions which require an employee with the respective role, it can attempt interaction with the person in proximity via the indication unit 6 of workshop 4, e.g. a display or an augmented reality setup). In case the device ID is new to the system, no role will be retrieved and the proximity detector 5 will create a "new device detected" event which triggers the on-boarding process on the client side. Once completed, the client 14 pushes the role associated with the newly joined device to the proximity detector 5 which further relays it to the role management service of the role management unit 9.

The role management service of the role management unit 9 manages the lifecycle of the device ID - personnel role records (create, update, delete) using a persistent storage backend. Based on this data it serves device ID queries and retrieves their associated personnel role.

The deployment of the services can change the way the system functions. The Bluetooth scanner 13 and the proximity detector 5 services need to be deployed on the machines located in the workspaces 4 (i.e. one instance of each service per workspace 4). The role management unit 9 can be deployed in a single location (i.e. one instance per plant 1, or one instance per production line), or it can be deployed alongside the other services (i.e. one instance per workspace 4). When deployed centrally, all other service instances will connect to this single role management unit 9, allowing the plant personnel 15 to go through the on-boarding process only once, being subsequently known by all workspaces 4.

Conversely, when deploying the role management unit 9 with multiple instances, this will require the plant personnel 15 to on-board individually for each instance; this deployment might be useful when there is a defined separation of responsibilities for some workspaces 4.

Independent of the grammatical term usage, individuals with male, female or other gender identities are included within the term.

### LIST OF REFERENCE SIGNS

- 1: Plant
- 2: Portion of failure information data 3
- 3: Failure information data
- 4: Workspace
- 5: Proximity detector
- 6: Indication unit
- 7: Mobile communication device
- 8: Status information data
- 9: Role management unit
- 10: Distance data
- 11: Distance
- 12: Database
- 13: Bluetooth scanner
- 14: Client
- 15: Plant personnel

## Claims

1. Computer-implemented method for distributing portions (2) of failure information data (3) of an industrial plant (1) to plant personnel (15) according to their role, the plant comprising
- at least a first, preferable a plurality of workspaces (4), each comprising at least one proximity detector (5) and an indication unit (6),
- at least a first, preferably a plurality of mobile communication devices (7) which are designed to be carried by plant personnel (15),
- at least one role management unit (9) which is designed to have access to a database (12) in order to store data,
- the database (12) comprising a table of roles and a table of workspaces (4), comprising at least a first workspace position entry corresponding to the first workspace (4),
the computer-implemented method (1) comprising the steps of
- receiving position data of the first mobile communication device (7) from the at least one proximity detector (5) of the first workspace (4),
- comparing this position data to the at least first workspace (4) position entry in the table of workspaces (4) in the database (12),
- calculating the distance (11) from the first workspace (4) to the first mobile communication device (7) and assigning measured distance data (10) to the first mobile communication device (7),
- receiving failure information data (3) from the first workspace (4),
- dividing the failure information data (3) into portions (2) related to roles,
- assigning the first mobile communication device (7) to a role, if the role is known, or requesting the role, if the role is unknown, which step is performed by the role management unit (9),
- adding these assignations to the table of roles,
- causing the indication unit (6) of the first workspace (4) to indicate the portion (2) of failure information data (3) related to the role of the first mobile communication device (7), if the distance data (10) assigned to the first mobile communication device (7) is below a prescribed maximum distance,
which steps are repeated after a timespan.

2. Method (1) according to claim 1, **characterized in that** if the plant (1) comprises more than one mobile communication device, the first mobile communication device (7) is the mobile communication device to which the smallest distance data (10) is assigned to.

3. Method (1) according to claim 1 or 2, **characterized in that** if empty failure information data (3) is received, the method (1) causes the indication unit (6) of the first workspace (4) to indicate an All-OK-Message.

4. Method (1) according to claim 1 or 2, **characterized in that** if non-empty failure information data (3) is received, the method (1) causes the indication unit (6) of the first workspace (4) to indicate an Assistance-needed-Message.

5. Method (1) according to one of the preceding claims, **characterized in that** parallel to the failure information data (3), status information data (8) is received from the at least first workspace (4) and is divided into portions of status information data assigned to roles, which portion of status information data (8) of the first workspace (4) related to the role the mobile communication device (7) is assigned to, is indicated, especially additionally to the All-Ok-Message, by the indication unit (6) of the first workspace (4).

6. Method (1) according to one of the preceding claims, **characterized in that** the mobile communication device (7) and the proximity detector (5) are Bluetooth-ready devices and can be coupled to each other.

7. Method (1) according to one of the preceding claims, **characterized in that** the indication unit (6) is an array of light emitting diodes or a screen, preferably a touchscreen.

8. Computer program product **comprising** instructions to cause a system comprising at least a first, preferable a plurality of workspaces (4), each comprising at least one proximity detector (5) and an indication unit (6), at least a first, preferably a plurality of mobile communication devices (7), a database (12) comprising a table of workspaces comprising a workspace position entry per workspace and a table of roles and the system further comprising at least one role management unit (9), to perform all the steps of claims 1 to 7.

9. A computer-implemented device **comprising** at least a first, preferable a plurality of workspaces (4), each comprising at least one proximity detector (5) and an indication unit (6), the device further comprising at least a first, preferably a plurality of mobile communication devices (7), the device further comprising a database (12) and at least one role management unit (9), which device is adapted to execute a method according to one of claims 1 to 7.
